# EUROPEAN PATENT APPLICATION

(11) **EP 4 738 276 A1**
(43) Date of publication of application: **06.05.2026**
(21) Application number: 24210964.3
(22) Date of filing: 05.11.2024
(51) Int. Cl.: G06V 10/26, G06V 10/75, G06V 10/82

(54) **IDENTIFYING AND MATCHING ASSETS IN 3D DATA**

(71) Applicant: Hexagon Innovation Hub GmbH, 9435 Heerbrugg (CH)
(72) Inventor: WINISTÖRFER, Martin, 9453 Eichberg (CH); PRADOS-TORREBLANCA, Andres, 9008 St.Gallen (CH); LOPEZ FERNANDEZ, Luis, 9450 Lüchingen (CH)
(74) Representative: Kaminski Harmann

(57) **Abstract**

The invention pertains to a computer-implemented method for automatically identifying representations (20) of assets in a 3D model, the method comprising: segmenting the 3D model into a plurality of cluster elements, at least a subset of cluster elements including a representation of an asset; organizing each cluster element into an asset structure (25) comprising a plurality of nodes (26, 27) and edges; and computing an asset embedding (28) for each of the nodes and edges, each asset embedding representing an asset or a part thereof, wherein the method further comprises, particularly in real time: obtaining a search template from the user, the search template corresponding to a user-selected asset or a user-selected representation (10) of an asset; generating, based on the obtained search template, a template structure (15) comprising a plurality of nodes (16, 17) and edges and a template embedding (18) for each of the nodes and edges, each template embedding representing the user-selected asset or a part thereof; comparing the template embeddings with the asset embeddings of a multitude of asset structures to find representations of assets in the 3D model that are similar to the user-selected representation of an asset; and providing information about the found representations of assets to the user.

## Description

The present invention pertains to a method of automatically identifying representations of assets in a three-dimensional data set such as a point cloud.

It is known to capture 3D data of a surrounding as a point cloud, for instance using a laser scanner or similar capture device. The captured 3D data can then be visualized on a display to a user. Sometimes, it is necessary to find a certain asset in the 3D data. For example, the user might want to find specific machines or types of doors in the point cloud data. Depending on the size of the 3D data and the amount of assets in the data, this can be a tedious and time-consuming work. It would therefore be desirable to provide a method allowing a user to easily initiate an automated search for assets in 3D data.

One solution is to run object detection algorithms in 3D for a specific type of assets. To distinguish the assets, the algorithms would need to be trained on many different types of assets. Disadvantageously, the specified asset must be known in advance, i.e., before the algorithms are trained and deployed. This leads to a very large number of classes, increasing the necessary size of the neural network capacity. Also, there is no or only a limited amount of data of an asset available to train on. The large number of classes added to the limited amount of data for certain classes produces a data imbalance during training. Consequently, the algorithm is prone to classify unseen objects with the most common classes used during training or detect less times uncommon object classes.

Alternatively, instead of finding assets directly in 3D space, assets are located on corresponding images using 2D object detection, and once identified, projected into 3D to highlight the asset. Disadvantageously, this solution only works if images as well as an accurate projection between the images and the point cloud are available in the data. Other disadvantages include the multi-view aggregation, i.e. the handling of multiple detection of same objects, and the poor performance in distinguishing in between foreground and background of the point cloud, i.e. between points of the object and points behind the object from the point of view of the image.

US 2023/0028242 A1 discloses generating a unique identification code for an industrial commodity, and US 11,704,343 B2 discloses an Artificial-Intelligence based method for associating data regarding physical-world assets from a plurality of databases.

Point cloud registration, i.e., aligning different scans to a single geometrically consistent point cloud, is a main application for 3D feature descriptors. For instance, an approach for 3D point cloud registration is disclosed by K. Fu et al.: "Robust Point Cloud Registration Framework Based on Deep Graph Matching", 9 November 2022 (arXiv:2211.04696v1). A. Zeng et al., "3DMatch: Learning Local Geometric Descriptors from RGB-D Reconstructions", 9 April 2017 (arXiv:1603.08182v3), disclose an approach for matching local geometric features on real-world depth images. While this approach follows the 2D paradigm, i.e., to find correspondences between features in 3D space using feature descriptor and matching algorithm, these features are not representing objects or assets. There is no association between the 3D feature and actual type of asset, like an asset from a catalogue or library.

It is possible to consider assets as a whole or as the sum of their sub-parts. This involves extending the basic principle of 2D matching into 3D space and providing solutions on how to handle and compare similar assets or objects. For instance, this task of finding assets in 3D space based on template could be accomplished in the following way: creating a 3D template, computing an embedding for the template, processing point cloud sample with same window size, computing list of 3D embeddings, and comparing the list with template embeddings to identify potential matches. Whereas this approach is similar to 2D matching methodologies, in 3D space the sampling of the point cloud disadvantageously is very computation expensive. Also, computation in real-time is not possible, and the user needs to wait many minutes for the result. In addition, edges and fine details are difficult to segment in point clouds compared to images.

It is therefore an object of the present invention to provide an improved method for identifying assets in a point cloud based on a user input.

It is a particular object to provide such a method that allows to identify the assets reliably and in real time.

At least one of these objects is achieved by the method of claim 1 and/or the dependent claims of the present invention.

The claimed invention pertains to a computer-implemented method for automatically identifying representations of assets in a 3D model of an environment. The 3D model, e.g., may be a point cloud or a mesh, and the environment may comprise a multitude of assets of a multitude of different asset types. The method comprises:
- segmenting the 3D model into a plurality of cluster elements, at least a subset of cluster elements including a representation of an asset;
- organizing each cluster element into an asset structure comprising a plurality of nodes and edges;
- computing an asset embedding for each of the nodes and edges, each asset embedding representing an asset or a part thereof;
- obtaining a search template from the user, the search template corresponding to a user-selected asset or a user-selected representation of an asset;
- generating, based on the obtained search template, a template structure comprising a plurality of nodes and edges and a template embedding for each of the nodes and edges, each template embedding representing the user-selected asset or a part thereof;
- comparing the template embeddings with the asset embeddings of a multitude of asset structures to find representations of assets in the model that are similar to the user-selected representation of an asset; and
- providing information about the found representations of assets to the user.

Accordingto some embodiments, the asset structure and the template structure are graph structures or tree structures, particularly octrees.

According to some embodiments, the template structure is generated so that the template embeddings have a same format as the asset embeddings.

According to some embodiments, comparing the template embeddings with the asset embeddings is performed by a trained neural network.

According to some embodiments, the method comprises a pre-processing of the 3D model, the pre-processing being completed before the template is obtained from the user, wherein at least the segmenting of the 3D model and the organizing of the cluster elements are part of the pre-processing. In particular, also the computing of the node embedding for each of the nodes and edges can be part of the pre-processing.

According to some embodiments, at least the steps of generating the template structure, comparing the template embeddings with the asset embeddings, and providing the information to the user are performed in real time.

Accordingto some embodiments, the method comprises displaying the 3D model to a user. Optionally, the displayed 3D model may be a pre-processed 3D model.

In some embodiments, obtaining the template from the user comprises enabling the user to select a representation of the asset in the displayed 3D model.

According to some embodiments, providing the information about found representations of assets to the user comprises displaying the found representations of assets in the 3D model in a highlighted manner.

According to some embodiments, the 3D model is a point cloud and the obtained search template is or comprises a parametrized model, particularly a BIM or a CAD model, and generating the template structure comprises generating a synthetic point cloud from the parameterized model, particularly using data augmentation, or comparing one or more existing similar parametrized models of a specific asset and using an existing point cloud of that asset.

According to some embodiments, the obtained search template comprises at least one of text, video and images related to the user-selected asset, and generating the template structure comprises recognizing the user-selected asset from the text, video or images, particularly wherein the 3D model is a point cloud and generating the template structure further comprises using an existing point cloud of the recognized user-selected asset.

According to some embodiments, the method comprises a filtering of outliers in the found representations of assets before providing the information to the user.

In some embodiments, the method comprises enabling the userto provide feedback regarding the provided found representations of assets, wherein the feedback is used for improving the filtering, particularly wherein the feedback comprises selected examples of true positives and false positives

According to some embodiments, organizing the cluster elements into the asset structure is performed by a trained neural network.

In some embodiments, generating the template structure is performed by the same trained neural network.

In some embodiments, the trained neural network is a Graph Neural Network (GNN) that has been trained using symbolic rules to learn relationship constraints.

According to some embodiments, organizing the cluster elements into the asset structure comprises:
- using vision foundation models on images to identify and group assets;
- enforcing multi-view consistency;
- establishing the structure of all assets based on neighbourhood;
- refining the structure to a required granularity;
- creating an embedding vector for each element; and
- assigning the embedding vectors to the structure,

In some embodiments, the asset structure is a hierarchical structure.

The claimed invention also pertains to a computer program product comprising program code having computer-executable instructions for performing the aforementioned method.

The invention in the following will be described in detail by referring to exemplary embodiments that are accompanied by figures, in which:
- Fig. 1: shows an exemplary 3D model including representations of searchable assets;
- Fig. 2: is a flow chart illustrating an exemplary embodiment of a method according to the invention; and
- Fig. 3: illustrates comparing a search template provided by a user with the point cloud to identify assets searched by the user.

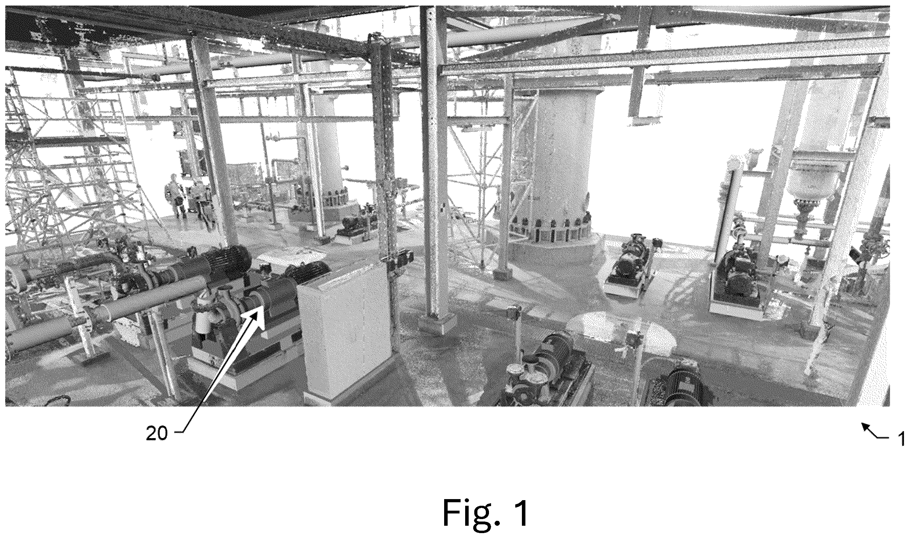

Figure 1 shows an example of a three-dimensional (3D) model 1 comprising a multitude of different "assets" as displayed on a display of a computing device. In particular, the 3D model can be one of a point cloud and a mesh. In the shown example the 3D model is that of a factory work floor. Assets are objects of interest comprising a plurality of distinct 3D features. In the shown example, a plurality of same (or similar) pumps are located in the work floor, each pump comprising a plurality of features making up the pump. The shown 3D model 1 comprises a representation of a first pump 20.

The invention disclosed herein presents an improved approach for efficiently identifying and locating same or similar assets in 3D space. It implements a workflow that can compare assets in 3D instantly. Using "asset-aware" methods to group/cluster points as structured elements, it has an efficient method to compare templates with "asset-aware" structures. "Asset aware" means that the structure has information on "object" level meaning about the different assets as opposed to, for instance, agnostic graph embeddings, which might have some information about an object, but there was no process which would order the information into "objects". An information structure is generated which is well ordered and organized by "objects" or "assets" as, e.g., a Graph Neural Network (GNN) is run with loss functions or symbolic rules and constraints that are targeted to distinguish assets.

A key idea is the structuring of the point cloud to reduce information size but maintaining information about the content and composition of the point cloud, including the relations between the assets present in the scene, to be able to find assets in the point cloud efficiently. Overall, this method gives the following advantages over known solutions: The search for same assets is computationally efficient as 3D embeddings are pre-computed and of limited size. Asset instance consistency is achieved, as a single asset is represented in 3D space, and multi-view aggregation problem can be avoided. For instance, pre-computation can occur immediately after the user has uploaded a point cloud to the cloud storage. Meshing the point cloud can be triggered automatically. The creation of the asset-aware structure for the whole data can be triggered in parallel. Using graphs to abstract the point cloud and the "asset-aware" structure for objects enables a robust search and comparison functionality.

The structuring and the different embeddings of the asset-ware structure (i.e., the whole scene) and the structuring and the different embeddings of the template (i.e., an asset) must be compatible to be able to compare them later. In deep learning, for embeddings, this is often called "joint embedding space". This joint space is typically learned by a neural network.

Since the user knows in advance what he is looking for, he inputs a representation of the searched asset as a search template. For instance, the search template may comprise a parametric model, like building information model (BIM) or computer-aided design (CAD) model, or a point-cloud representing the object. The point-cloud template can be for instance obtained, by a user clicking on a visualization of an asset in the displayed point cloud and using image processing to select a group of points of an asset.

According to the present invention, by selecting one of the assets of one of the pumps (indicated by the white arrow), e.g., using a mouse and cursor or a touch on a touchscreen, a user may initiate a search for all same or similar (like) assets in the 3D model. This not only allows identifying all same or similar assets but also all pumps having such an asset.

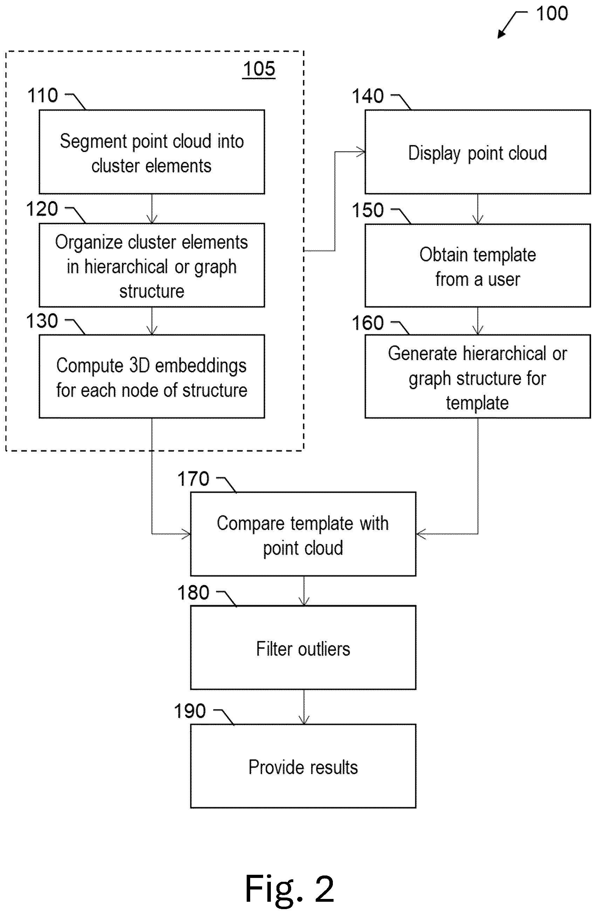

Figure 2 is a flow-chart illustrating an exemplary embodiment of a computer-implemented method 100 for comparing objects in a 3D model, particularly in a 3D point cloud.

In particular, the illustrated method allows "3D asset matching". 3D asset matching includes use cases, in which the user provides details about a certain asset and wants to find one or more same assets accurately and reliably in the 3D model. For instance, in one of such use cases, in an industrial facility the method allows the user to find all pumps from a specified manufacturer based on a template of the pump, such as a 3D CAD representing such a pump. In an office building having many different types of windows, the user can locate and count the number of windows of a specific type (e.g., all windows opening to the left), based on clicking on one of such windows in the point cloud. In an industrial building having several different types of columns, the user is enabled to locate the structural columns and to measure the distance between them, by selecting the points of a single column in 3D space. In traffic environments, where assets like beacons, signals or any other infrastructure might be unique for a specific region or location, a system to automatically identify and geolocate assets of interest by simply providing or identifying these in the data, a reference sample enables or optimizes control, maintenance or planning activities. Other use cases may comprise identifying "safety" related assets such as fire extinguishers or emergency lights, to verify the fulfilment of safety regulations or to plan maintenance operations.

The method may comprise a preprocessing 105 of the point cloud, wherein a number of steps may be performed as part of the preprocessing 105.

In a first step of the method 100, the point cloud is segmented 110 into cluster elements. These cluster elements are then organized 120 in an "asset-aware" structure comprising a plurality of nodes and edges. As show here, this segmentation 110 and organizing 120 can be performed as part of the preprocessing 105. The method 100 may be performed on a computing device or a plurality of connected computing devices. For instance, the steps included in the preprocessing 105 may be performed on a different computing device than the other steps.

The "asset-aware" structure, e.g., may be a graph or a hierarchical structure, such as a tree structure, e.g. an octree. For example, if the cluster elements are windows, organizing the cluster elements in the hierarchical structure comprises grouping all windows, then grouping by typical elements of windows such as handle and frame, then grouping sub-elements of the elements.

This segmentation 110 and organizing 120 is done by an algorithm (clustering algorithm) optimized for grouping assets. These steps can also be learned and executed by a neural network. Consequently, the clustering algorithm used to generate the "asset aware" structure can be a neural network that is trained to segment objects (i.e., the assets). The clustering is then learned. Alternatively, the neural network can be a foundation model, that can cluster and group the point cloud into a logical and "asset aware" structure, without being learned.

For instance, the clustering algorithm can be or comprise the following:
- vision foundation models are used on images to identify and group assets;
- multi-view consistency is enforced;
- the structure of all assets is established based on neighbourhood;
- the structure is refined to a required granularity;
- for each image patch (element of object) an embedding vector is created; and
- embedding vectors are assigned to the structure.

Embeddings for the edges connecting the image patches can also be computed, representing the relations between neighbouring patches.

Next, a 3D embedding is computed 130 for each node of the structure, optionally still as a part of the pre-processing 105. Each 3D embedding represents a potential part or object of an asset or sub-asset. A 3D embedding does not necessarily represent a full object (like a window) with all of its elements but might represent only a part thereof or might even include other asset parts. Nevertheless, the 3D embedding will very "closely" represent an asset or a part of it. The embedding is standardized to the specific point cloud, i.e., needs to be clustered in the same way as the point cloud. Optionally, the 3D embeddings may comprise feature vectors describing the local element.

The "asset-aware" structure resulting from the organising 120 is similar to a scene graph. A scene graph can consist of a graph and/or a tree representation with nodes and edges. Each node and edge can store information in the form of features, like in graph theory. In the context of the present invention, a node represents an asset or asset part, and an edge is a relationship between the assets and asset parts. Each node and edge has an embedding, i.e. a vector of information. These embeddings can be learned, e.g. using a Graph Neural Network (GNN) from features and/or edges. In such a learning phase, information from neighbouring nodes and edges are transferred to a target node (messaging). The features from which embeddings are learned, can be geometrical, topological, material or other information. This information can occur in different modalities, such as text description, images, a point cloud or parametric model. Each asset can be treated as subgraph consisting of an "asset-aware" substructure. For instance, a window can be represented by a BIM library model. The window is the asset. In a geometrical representation, the window is a 3D object comprising primitive shapes such as boxes, cylinders or rectangles. These primitive shapes form the sub-structure. This is similar to CAD models that are often geometrically represented in a B-rep format. The window can also be abstracted in more logical parts such as window frame, multiple glass, seals and handles, instead of pure geometrical primitives. Both representations, the abstract and the geometrical can be combined into a single sub-graph or sub-structure, combing the respective information. For instance, material can be attached to each part / node of the window- such as wooden or plastic frame. This information is stored as feature in the nodes.

During the segmentation 110, an algorithm clusters a full scene into assets. For instance, if the input is a point cloud, the point cloud is clustered into such a scene graph. If the input is a BIM, this model is clustered into such a scene graph. The clustering occurs "asset aware", i.e., it differentiates between different objects (or "assets"), like walls, doors or windows, and between sub-parts of the objects (or "sub-assets"). During this process, additional information is attached to the graph. For instance, if images are available, images are added to a node in the asset aware structure based on spatial information. The initial structure and the level of granularity of assets might be incorrect. For instance, a sub-structure of the scene structure is a window, but some nodes and edges are from the neighbouring wall. To correct the structure, GNN can be utilized to correct the structure. In that case, GNN uses information stored in the graph to update edge and node embeddings to better represent the true object and, thus, the scene.

It is critical that the asset-aware structure has a high granularity. This granularity can be directly proportional to the BIM's level of details (LOD). For instance, a window comprises a handle, but the handle has sub-assets like a lock, comprising pins, screws, metallic parts. Such information can be visible on images and, if the scan resolution is high enough, also in point cloud data.

Optionally, before learning the precise asset-aware structure using GNN, one can assemble a first version, for instance using clustering of points by colour information. Alternatively, general object detection approaches can be deployed to gain a first understanding about the scene and asset-aware structure. For instance, object or segmentation neural networks can be used on images or point cloud data to detect the assets. In a same way, relations can then be computed between assets using relationship modelling to create a connectivity graph of the full scene to generate an initial version of the structure. If the input is another modality, such as a BIM, other clustering methods might be applied. In the case of a BIMs, assets are arranged in a tree structure, and it is possible to create an initial version of the asset aware structure with simple heuristics.

Apart from creating asset-aware embeddings for each node and edge, a sub-graph / sub-structure like a window can also have a global embedding. In graph theory this is called a global representation. Nevertheless, it in the context of this invention, it is not to represent the full scene graph, but sub-graphs, essentially describing an asset in a single embedding. This as well can be learned, like the node and edge embeddings.

This asset embedding can be used later to compare assets (step 170). The learned asset embedding represents the sub-graph in a "condensed" way, i.e. is a lower/higher dimensionality representation or a global/local representation. For example, the learned asset embedding may be an enriched low-dimensional representation of the sub-graph. Simple similarity comparison method like cosine similarity can be deployed, to find a particular asset in the asset aware structure. This could serve as a first guess to locate an asset. In a second step, a more sophisticated approach can be used, like graph matching. In this case the method does not only compare to a single embedding like the asset embedding, but its full sub-structure including all the nodes and edges and its embeddings. This allows for a more reliable comparison as opposed to a single embedding. To give an example, in case of a window, the detailed design on the handle might not be well represented in the single embedding, but clearly distinguishable in the sub-structure. It is therefore an important property to identify a specific asset or compare the sub-structures to one another. The detail of the sub-structure is only limited by the available information / data available. The information can be accumulated over time or using GNN message passing methods or prediction method to complete missing nodes and edges of a sub-structure.

The asset "granularity" representation used for the matching depend on a desired speed and accuracy for each specific use-case. Depending on the use-case the search may follow a top-down approach or a bottom-up approach. The latter may be useful, e.g., if the user wants to search for a certain small part of an object.

The creation of the asset-aware structure (e.g., the pre-processing 105) may occur in a background process. For instance, a user may upload a point cloud to a loud service, such as "Hexagon Digital Reality" (HxDR). This triggers a background process that can include different things, such as generating a mesh, computing the 3D point cloud segmentation or simply clean the point cloud automatically. After a certain amount of time, typically a few minutes, the pre-processed data is available. In a same manner, and in parallel to other pre-processing, the asset aware structure can be computed. Firstly, by generating an initial version of the structure and in a second step by for instance applying a pretrained GNN model to correct, the initial structure is optimized to the final structure. During this process other modalities can be integrated in the progress, not only the uploaded point cloud. For instance, if images or a BIM model are available, the information can be projected onto the structure. If no other modality exists when the point cloud is uploaded, a first version of an asset-aware structure is created onto which later other data can be uploaded and projected, thereby resulting in a single representation of the scene using all available information represented in an asset-aware structure. This ensures highest reliability in any potential downstream task such as asset matching, in which a sub-structure is provided and needs to be identified in the asset aware structure of the scene.

The asset-aware structure is a general container onto which all available information can be projected. This information can come from different modalities. Such a structure is able to combine this information into a single "database", whereas otherwise information is stored in single modalities like a point cloud or images in an unstructured way. It is therefore possible with such a structure to extract information in a very optimized way for any downstream task, including asset matching or object classification. The asset-aware structure is a unified representation of a scene that allows to store all information from all sources.

Any modality can be projected on such a graph. Not only point cloud or images, but parameterized models as well, such as CAD models or BIM library models. In a first iteration an asset embedding can be generated for such an object, which would allow for fast and immediate comparison. Or a sub-structure can be generated. While this appears straightforward, as such a library model has typically already a tree structure, information such as material might be missing and must be additionally projected as feature onto a sub-structure.

After the preprocessing 105 of the point cloud is finished - whether as a part of the method 100 or not - the point cloud may be displayed 140 to a user, for instance as shown in Figure 1 on a display of the computing device.

A search template is obtained 150 from the user. By providing a search template as input to the computing device, the user may initiate a search for a certain asset, e.g., all same or similar assets, in the 3D model. For example, the user might want to find a specific machine or type of door in the point cloud data. The obtained search template may comprise a parametric model, like a BIM or CAD model, a point cloud group representing the asset, or any other representation.

For instance, the user may be enabled to select an asset in the point cloud as the search template by selecting one of the assets in the point cloud, i.e., the template can be obtained 150 by the user clicking (e.g., using a mouse and cursor or a touch on a touchscreen) on a visualization of an asset in the point cloud and using image processing to automatically select a group of points of the point cloud as belonging to the selected asset.

Then, a structure for the template is generated 160 that is compatible with the structures of the cluster elements, i.e. has the same format. Like the structure generated in step 120, it comprises a plurality of nodes and edges. In other words, a 3D embedding for the obtained search template is generated (3D template embedding). If the obtained template is a point cloud, the same graph generation function as in the preceding steps 110, 120, 130 can be applied to generate the 3D embedding for the template. The template might be hierarchical in nature and/or have a graph representation. In the simplest case, the template can be a structure with one 3D embedding. In general, the 3D template embedding is an "asset aware structure" compatible with the "asset aware scene structure", to be able to query and search it. Here again, it is critical that both, template and scene are in a "joint space", the structure and all embeddings.

If the template is a parametrized model, such as a BIM or CAD, 3D template embeddings may be computed by generating a synthetic point cloud from the parameterized model, using data augmentation to create a more generalized embedding. Alternatively, 3D template embeddings may be computed by comparisons of existing and similar parametrized model of a specific asset and using the real-point cloud of these assess to ensemble the embedding.

Instead of using a parameterized model or group of point cloud, the 3D template embedding can be generated 160 from other sources, such as text, video or images. By providing a text-to-embedding functionality, the user would be enabled to query point cloud by text. Different modalities like image or text can be projected onto the asset-aware structure, similar to creating an initial version of such a structure using the point cloud as input.

Once the user has provided the template, the generated 3D template embedding is compared 170 with the computed 3D embeddings of the nodes. For instance, this may comprise using latent space comparison methods, such as dot product or cosine similarity, where the matching algorithm starts on the highest hierarchical level and decides which pre-computed 3D embedding is the closest. After a first-level selection is made, the algorithm searches on any sub-level and verifies the hypothesis with the connected nodes in the graph, providing an overall similarity score describing similarity between the 3D embedding and the pre-computed embeddings. For sub-parts, a bottom-up approach may be faster. The best matching, particular considering the need for a structured / hierarchical comparison, can also be learned and executed by a neural network (NN).

Comparing 170 the template with the point cloud (structural elements) can be learned by an NN. In 2D matching these NN matchers learn on single feature vector or have positional encoding. According to the present invention, this approach can be extended into learning to compare the "asset aware" structure and deducing correspondences on that level. Alternatively, the neural network can be a foundation model, that is able to compare the "asset aware" structure, its node embeddings and relationships.

The "asset aware" structure maintains explicit relationships between the elements of an object. These relationships are explicitly used for comparison of template and point cloud, whereas not directly present in conventional 3D embeddings for 3D point cloud matchers. Optionally, the levels of hierarchy not only group elements of assets, but the hierarchy may represent the degree of detail of an asset. This means that if only higher levels are used, a broad description of the object results, which can be used to find "similar" assets. The deeper levels represent the fine details of an object and can be used to find "exactly the same" assets.

Optionally, to improve and simplify the matching of the template with the "asset aware" structure, the method 100 may comprise a filtering 180 of outliers in the 3D embedding space. Optionally, in a second stage, a user can provide additional information by selecting examples of true positives and false positives to improve the filtering of the desired target object. These auxiliar templates can be used to compute contrastive scores or triplet scores (select two good ones and one false positive). Filtering 180 of outliers in the 3D embedding space can be efficiently discarded by providing additional templates from the output provided in the previous step.

Optionally, outliers filtering 180 can be extended by a foundation model (GPT) prompt evaluation extracting text prompts from the 3D embeddings and discarding outliers by finding a discriminative prompt.

Finally, the results of the comparing are provided 190 to the user. For instance, this may comprise highlighting the matches - i.e. all same or similar assets - in the displayed point cloud.

Advantageously, it is not necessary to actually know what type of asset the requested asset is. Instead, same assets can be found in 3D data using a comparison functionality. However, this comparison functionality must be very robust to detect the same assets in 3D data and be able to differentiate with high granularity.

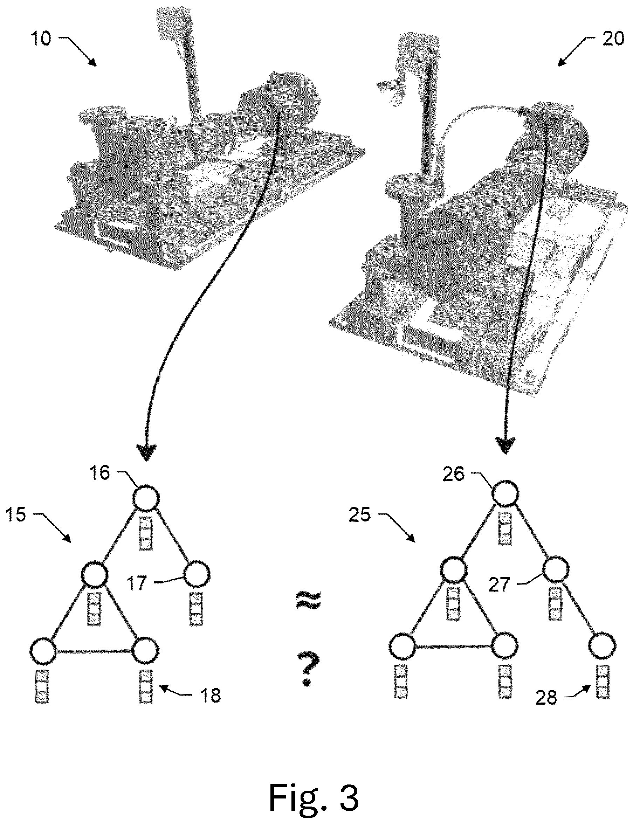

Figure 3 illustrates the step of the exemplary method of Figure 2 of comparing the search template with the point cloud.

On the top left, a search template obtained from the user is illustrated by a user-selected representation 10 of an asset, the asset being a pump.

On the right side, a representation 20 of an asset corresponding to the search template is shown, i.e. a representation of a pump. This representation is one of a plurality of cluster elements which have been obtained through segmentation of the point cloud. A structure 25 comprising a plurality of nodes 26, 27 is shown below the representation 20 of the pump. The cluster element corresponding to the pump has been organized into this structure 25, wherein an embedding 28 has been computed for each of the nodes (node embedding). In the structure 25, the circles represent the nodes 26, 27, and the three squares below each node represent the respective embedding 28. A node embedding of the top node 26 represents the pump as a whole, while node embeddings of the child nodes 27 represent specific parts of the pump.

When the search template corresponding to the user-selected representation 10 is obtained from the user, a structure 15 is generated for the search template in the same manner as it has been done for the cluster elements of the point cloud (i.e., in the "joint space"). Also this structure 15 comprises a plurality of nodes 16, 17 (represented by circles) and an embedding 18 for each of the nodes (template embedding). The template embedding of the top node 16 represents the pump, the embeddings of all other nodes 17 represent a specific part of the pump. The two structures 15, 25 are then compared with each other to determine whether they - and thus the respective representations 10, 20 - are the same or at least sufficiently similar. This comparison comprises comparing all of the template embeddings 18 with all of the node embeddings 28.

The comparison of the search template's structure 15 can be performed with each of the point cloud's structures 25 to identify all assets in the point cloud that are same or similar to the searched asset. The identified assets (or their representations 20) are then provided to the user in real time. For instance, they may be highlighted in the point cloud.

By design, Graph Neural Networks can implement different embedding spaces both at graph "node" and "edge" levels. Meanwhile "node" embeddings tend to learn to encode intrinsic/local characteristics of the object, "edge" embeddings are capable of capturing the relational/extrinsic information in the graph. More advances Graph Attention Networks integrate the concept of "attention" between nodes, enabling the system to learn relationships among nodes at a much bigger scale and reliability than traditional convolutional approaches. Graph Neural Networks can easily integrate symbolic rules (neuro-symbolic AI) to implicitly learn relationship constraints during the training process. If the semantics associated to each node of the graph are known during training, additional constraints can be designed to inject additional penalties in the loss term during training process that "guide" the network to reproduce those constraints during training (i.e. minimize or eliminate activation/attention on edges connecting floor and ceiling nodes).

Exemplary approaches to train a Graph Neural Network (GNN) to minimize connections between certain types of nodes (like between "chair" and "ceiling" in a room graph) using neuro-symbolic AI include the following three steps:
1. Graph Definition: Firstly, an asset-aware structure is constructed in such a way that nodes, at a defined level of the hierarchy, represent unique objects in the scene (e.g., walls, floors, ceiling and assets) and edges represent the relations between them (e.g., adjacency and/or relative position).
2. Define Symbolic Rules: As Neuro-Symbolic AI is used, some symbolic rules need to be imposed. Here, the rule is that there should be no relation (e.g., direct edge) between "chair" and "ceiling" nodes. This rule is encoded programmatically as a part of the graph construction, rejecting the connection and/or specifying different penalty values that represent connectivity likelihood.
3. Incorporation of Symbolic Rules in GNN training process: There are a couple of approaches to incorporate symbolic rules. On the one hand, the rules can be incorporated as direct connectivity constraints, selectively decidingto not update certain node relations by ensuring no message passing occurs between certain types of nodes (in this case between "chair" and "ceiling" nodes). On the other hand, the rules can be incorporated indirectly by enforcing the connectivity constraints in the loss function, allowing the network to learn when to minimize the message passing between nodes using attention mechanism or other automatic selection methods.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for automatically identifying representations (20) of assets in a 3D model (1) of an environment, the method comprising
- segmenting (110) the 3D model (1) into a plurality of cluster elements, at least a subset of cluster elements including a representation (20) of an asset;
- organizing (120) each cluster element into an asset structure (25) comprising a plurality of nodes (26, 27) and edges; and
- computing (130) an asset embedding (28) for each of the nodes (26, 27) and edges, each asset embedding representing an asset or a part thereof;
wherein the method further comprises:
- obtaining (150) a search template from the user, the search template corresponding to a user-selected asset or a user-selected representation (10) of an asset;
- generating (160), based on the obtained search template, a template structure (15) comprising a plurality of nodes (16, 17) and edges and a template embedding (18) for each of the nodes (16, 17) and edges, each template embedding (18) representing the user-selected asset or a part thereof;
- comparing (170) the template embeddings (18) with the asset embeddings (28) of a multitude of asset structures (25) to find representations (20) of assets in the model (1) that are similar to the user-selected representation (10) of an asset; and
- providing (190) information about the found representations (20) of assets to the user.

2. Method (100) according to claim 1, wherein the asset structure (25) and the template structure (15) are graph structures or tree structures, particularly octrees,
in particular wherein the template structure (15) is generated (160) so that the template embeddings (18) have a same format as the asset embeddings (28).

3. Method (100) according to claim 1 or claim 2, wherein the 3D model (1) is a point cloud or a mesh, particularly wherein the environment comprises a multitude of assets of a multitude of different asset types.

4. Method (100) according to any one of the preceding claims, wherein comparing (170) the template embeddings (18) with the asset embeddings (28) is performed by a trained neural network.

5. Method (100) according to any one of the preceding claims, comprising a pre-processing (105) of the 3D model (1), the pre-processing (105) being completed before the template is obtained (150) from the user, wherein at least the segmenting (110) of the 3D model and the organizing (120) of the cluster elements are part of the pre-processing (105), particularly wherein also the computing (130) of the node embedding for each of the nodes and edges is part of the pre-processing (105).

6. Method (100) according to any one of the preceding claims, wherein at least the steps of generating (160) the template structure (15), comparing (170) the template embeddings (18) with the asset embeddings (28), and
providing (190) the information to the user are performed in real time.

7. Method (100) according to any one of the preceding claims, comprising displaying (140) the 3D model (1) to a user, particularly wherein the displayed 3D model is a pre-processed 3D model.

8. Method (100) according to claim 7, wherein obtaining (150) the template from the user comprises enabling the user to select a representation (20) of the asset in the displayed 3D model (1).

9. Method (100) according to claim 7 or claim 8, wherein providing (190) the information about found representations (20) of assets to the user comprises displaying the found representations (20) of assets in the 3D model (1) in a highlighted manner.

10. Method (100) according to any one of the preceding claims, wherein the 3D model (1) is a point cloud, and the obtained search template is or comprises a parametrized model, particularly a BIM or a CAD model, and generating (160) the template structure (15) comprises
- generating a synthetic point cloud from the parameterized model, particularly using data augmentation; or
- comparing one or more existing similar parametrized models of a specific asset and using an existing point cloud of that asset.

11. Method (100) according to any one of the preceding claims, wherein the obtained search template comprises at least one of text, video and images related to the user-selected asset, and generating (160) the template structure (15) comprises recognizing the user-selected asset from the text, video or images, particularly wherein the 3D model (1) is a point cloud and generating (160) the template structure (15) further comprises using an existing point cloud of the recognized user-selected asset.

12. Method (100) according to any one of the preceding claims, comprising a filtering (180) of outliers in the found representations (20) of assets before providing (190) the information to the user,
in particular wherein the method comprises enabling the user to provide feedback regarding the provided found representations (20) of assets, wherein the feedback is used for improving the filtering (180), particularly wherein the feedback comprises selected examples of true positives and false positives

13. Method (100) according to any one of the preceding claims, wherein organizing (130) the cluster elements into the asset structure (25) is performed by a trained neural network, particularly wherein
- generating (160) the template structure (15) is performed by the same trained neural network; and/or
- the trained neural network is a Graph Neural Network that has been trained using symbolic rules to learn relationship constraints.

14. Method (100) according to any one of the preceding claims, wherein organizing (130) the cluster elements into the asset structure (25) comprises:
- using vision foundation models on images to identify and group assets;
- enforcing multi-view consistency;
- establishing the structure of all assets based on neighbourhood;
- refining the structure to a required granularity;
- creating an embedding vector for each element; and
- assigning the embedding vectors to the structure,
particularly wherein the asset structure (25) is a hierarchical structure.

15. Computer program product comprising program code having computer-executable instructions for performing the method (100) according to any one of claims 1 to 14.
